# EUROPEAN PATENT SPECIFICATION

(11) **EP 2 608 676 B1**
(45) Date of publication and mention of the grant of the patent: **03.09.2014**
(21) Application number: 11734150.3
(22) Date of filing: 22.07.2011
(51) Int. Cl.: A23F 3/14

(54) **A PROCESS FOR PREPARING A TEA PRODUCT**
HERSTELLUNGSVERFAHREN FÜR EIN TEEPRODUKT
PROCÉDÉ DE PRÉPARATION D'UN PRODUIT À BASE DE THÉ

(30) Priority: 14.10.2010 EP 10187611; 25.08.2010 IN MU23682010
(43) Date of publication of application: 03.07.2013
(73) Proprietor: Unilever N.V., 3013 AL Rotterdam (NL); Unilever PLC, London, Greater London EC4Y 0DY (GB)
(72) Inventor: BHOSLE, Balaji Marotrao, Bangalore 560 066 (IN); GANGAPPA, Rajashekhar, Bangalore 560 066 (IN); JAGANATHAN, Sridharan, Bangalore 560 066 (IN); MATHUR, Sandeep, Bangalore 560 066 (IN); VIRKAR, Prakash Dattatraya, Bangalore 560 017 (IN)
(74) Representative: Askew, Sarah Elizabeth
(86) International application number: PCT/EP2011/062632
(87) International publication number: WO 2012/025319

(56) References cited:
- EP-A1- 1 092 349
- WO-A1-2005/067727
- WO-A1-2010/116379
- DE-A1- 2 535 234
- DATABASE WPI Week 197715 Thomson Scientific, London, GB; AN 1977-26608Y XP002630936, & SU 526 339 A (GEOR SUBTROPICS IND) 29 September 1976 (1976-09-29)
- DATABASE WPI Week 198941 Thomson Scientific, London, GB; AN 1989-299500 XP002030224, & SU 1 472 036 A (TEA IND RES INST) 15 April 1989 (1989-04-15)
- DATABASE WPI Week 200782 Thomson Scientific, London, GB; AN 2007-888770 XP002630937, & JP 2007 274992 A (NARUKAEN KK) 25 October 2007 (2007-10-25)
- DATABASE WPI Week 200954 Thomson Scientific, London, GB; AN 2009-M51822 XP002661382, & IN MUM 200701750 A1 (HINDUSTAN UNILEVER LTD) 26 June 2009 (2009-06-26) cited in the application

## Description

### Technical Field

The present invention relates to a tea product and process of preparation thereof. It particularly relates to a black tea product.

### Background and prior art

Off-colour (light coloured) teas are available at low cost as their appearance is not acceptable to consumers, in particular to consumers who are habituated to brewing tea directly without using tea bags. One of the problems addressed by the present invention is to darken the colour of tea product, particularly a black leaf tea.

Indian patent IN187547 (Hindustan Lever Limited, published in 2002) discloses a method of preparing a granulated tea based product comprising granulating a mixture of 15 - 70% by weight dust tea with a particle size ranging from 0.1 to 1.0 mm, 30-85% by weight of sugar based additives and optional ingredients such as chicory and at least one flavour agent. Jaggery or gur is disclosed as a preferred sugar-based additive.

Indian patent application 1750/MUM/2007 (Hindustan Unilever Limited, published in 2009) discloses a composition comprising 30 to 95 wt% black tea, 0.5 to 30 wt% chicory, 0.5 to 40 wt% binder, and 0.01 to 5 wt% of a micronutrient selected from a vitamin, calcium, zinc, iron or a combination thereof. The binder is preferably sugar, maltodextrin, gum acacia, jaggery or mixture thereof.

EP 1092349 (Unilever, published in 2001) discloses a tea product with enhanced aroma and flavour comprising 15-95% by weight by weight black tea, up to 5% by weight of a mixture comprising fructose and glucose, up to 5% by weight of roasted nut powder and optionally roasted chicory and flavouring agents, dairy or non-diary whiteners, starch, preservatives at an optimal level.

US4880649 (Firmenich, 1987) describes a process for flavouring a composition chosen from among products for infusion or decoction selected from the group consisting of tea, camomile, verbena and mint in the form of leaves, powders or particles, said process comprising the steps of: directly spraying said composition with an emulsion comprising: 5to 30% by weight of a solid film-building vehicle selected from the group consisting of polyvinyl acetate, polyvinyl alcohol, dextrins, natural or modified starch, natural or modified proteins, vegetable gums, pectins, xanthanes, carboxymethyl cellulose, methyl cellulose, hydroxyethyl cellulose and lipoheterosaccharides; 0.1 to 20% by weight of an emulsifying agent selected from the group consisting of fatty-acid mono- or diglycerides, esters derived from a combination of fatty acids with sorbitol or a saccharide or alkoxylated derivatives thereof, or an ester of tartaric, citric, ascorbic or lactic acid; and 0.5 to 20% by weight of an active volatile flavouring substance which is non-miscible with water with the remainder of the emulsion being water; and subsequently drying the emulsion-sprayed composition such that the flavouring substance is in direct contact with the leaves, powders or particles of the composition and is retained in the form of droplets coated with a protective water soluble layer consisting of said film-building vehicle.

SU526339 describes a process for making granulated black leaf tea which involves treating the leaf with a sugar solution to increase the adhesion of the comminuted leaf during granulation.

SU1472036 discloses an instant tea granulate prepared using a mixture of black and green tea extract powders and starch syrup as a binder.

WO2005/067727 describes a process for improving the red colour of a tea beverage by contacting black leaf tea with ascorbic acid or its salts, an oxidising agent and water.

JP2007/274992 describes a process for producing granular dust tea by spraying the tea with enzymes in water.

It is an object of the present invention to provide a tea product with darker colour by treating the off coloured tea product.

It is another object of the present invention to increase the economic value of the off coloured tea product thereby satisfying consumer needs.

Present inventors have surprisingly found that off-colour black leaf tea or dust tea, after addition of aqueous solutions of specific substances followed by drying results into a tea product with darker colour acceptable to consumers.

### Summary of the Invention

According to the present invention, there is provided a process for preparing a tea product comprising the steps of:
a. Adding an aqueous solution or dispersion of a substance selected from the group consisting of sugars, starches, vegetable gums, chicory extract and enzymes or a mixture thereof to black leaf tea to obtain a mixture, and;
b. Drying the mixture to a moisture content of less than 10% by weight to obtain a tea product,
characterized in that the surface reflectance of the starting black leaf tea measured with amber tristimulus filter under D65 illuminant is greater than 12%, and wherein the tea product comprises 10-40% of sugars by weight when the selected substance is sugars.

### Detailed Description of the Invention

### The step (a)

The step (a) includes adding an aqueous solution or dispersion of a substance selected from the group consisting of sugars, starches or vegetable gums or enzymes or a mixture thereof to black leaf tea to obtain a mixture. Preferably, the addition of the aqueous solution or dispersion is by spraying. It is further preferred that the step (a) includes mixing the aqueous solution or dispersion with the black leaf tea. The mixing is preferably carried out in any suitable mixer. Preferred mixers include planetary mixer, screw mixer, paddle mixer or sigma mixer.

### Black leaf tea

The term "black leaf tea" as used herein means a tea produced by promoting the aerobic oxidation of fresh leaf catechins in reactions catalyzed by tea polyphenol oxidase. The term "fermentation" is also commonly used to refer to aerobic oxidation of fresh leaf tea catechins in reactions catalyzed by tea polyphenol oxidase. The term "fresh leaf" as used herein includes buds, leaves, and/or stem of the plant *Camellia sinensis.*

The term "dust tea" as used herein means a black leaf tea having mean particle size in the range 0.1-1 mm.

The term "instant black tea" means a product that is obtained from extraction of the black leaf tea in hot (80-100 °C) water, followed by filtration of insoluble solids to obtain a supernatant and after removing water from the supernatant. The term "black leaf tea" as used herein does not include "black instant tea".

Black leaf tea is preferably produced by a process comprising the steps of providing fresh tea leaf, macerating fresh tea leaf, withering the tea leaf, fermenting the tea leaf and drying the tea leaf to water content less than 10% by weight.

### The substance

The substance in the step (a) is selected from the group consisting of sugars, vegetable gums , chicory extract and enzymes or a mixture thereof. Preferably, the substance is selected from the group consisting of sugars, chicory extract and vegetable gums or a mixture thereof. More preferably, the substance is selected from sugars, chicory extract and vegetable gums. Most preferably, the substance is selected from vegetable gums, chicory extract or a mixture thereof.

The substance is preferably mixed with water to form the aqueous solution or dispersion. The mixing is preferably carried out under stirring.

The concentration of the substance in the aqueous solution or dispersion may vary widely depending on specific substance being used. In general the substance is preferably 0.05-80% by weight of the aqueous solution or the dispersion.

Temperature of the aqueous solution or dispersion is preferably in the range 1-95 °C, more preferably 10-80 °C, most preferably in the range 20-60 °C.

### Sugars

The preferred sugars include a monosaccharide, a disaccharide, a sugar alcohol, or a mixture thereof.

Monosaccharide is a chemical compound of general formula CₙH₂ₙOₙ where n = 3-7, and disaccharide is a condensation product of any two identical or different monosaccharides. Sugars also include corn syrups, which are mixtures of mono-, di- and higher saccharides and sugar alcohols.

Preferred sugars include disaccharides. A particularly preferred disaccharide is sucrose.

When sugar is used, the tea product comprises 10-40% by weight sugars. It is particularly preferred that the tea product comprises 15-35% by weight or even more preferably 20-30% by weight sugars.

### Starches

Starch may be a natural starch or a modified starch, although modified starches are preferred. Some non-limiting examples of preferred modified starches include EmCap® (Cargill) and HICAP® (National Starch).

When starch is used, the starch is preferably 0.5-10% by weight, more preferably 1-8% by weight, most preferably 3-6% by weight of the tea product.

### Gums

Any vegetable gum may be used in the present invention. The vegetable gum is preferably selected from guar gum, locust bean gum, gum acacia or mixtures thereof. It is particularly preferred that the vegetable gum is gum acacia.

When gums are used, the vegetable gum is preferably 0.5 -10% by weight, more preferably 1-8% by weight, and most preferably from 3-6% by weight of the tea product.

### Chicory extract

Chicory is a flowering plant of the genus *Chichorium* of the family *Asteraceae.* Many species of chicory are known. It is grown in most continents including Europe, North and South America. It is preferred that the chicory is roasted. Roasting of the chicory can be light, medium or dark as known by one skilled in the art. The most preferred is the medium roasted chicory.

The roasted chicory is then extracted with water at 75 - 100°C. After the extraction the resulting solution was separated to obtain the chicory extract.

### Enzymes

Preferred enzymes include pectinase, cellulase, tannase or a mixture thereof.

When enzymes are used, the enzyme is preferably 0.05-10% by weight, more preferably 0.1-0.5% by weight of the tea product.

### The step (b)

The step (b) includes drying the mixture obtained in the step (a) to a moisture content of less than 10% by weight to obtain a tea product. Preferably, during the step of drying, the mixture is contacted with a gas which is generally air. The gas temperature is in the range of preferably 10-200 °C, more preferably 50-120 °C, most preferably 60-90 °C.

The moisture content of the tea product is preferably less than 9% by weight, more preferably less than 8% by weight, and further preferably less than 7% by weight. There is no particular lower limit on the moisture content of the tea product, and the moisture content may be as low as 0% by weight

The step of drying is preferably carried out in a tray dryer, vacuum dryer, of a fluidized bed dryer.

### Colour of the black leaf tea and the tea product

Surface reflectance of the starting black leaf tea measured with amber tristimulus filter under D65 illuminant is greater than 12%, preferably greater than 12.2%, more preferably greater than 14%, and most preferably greater than 16%. There is no particular upper limit and the surface reflectance of the black tea may be as high as 80%. The surface reflectance has been found to be a good indicator of lightness/darkness of the black leaf tea or the end tea product, with lower values of the surface reflectance indicating darker colour of the black leaf tea or the end tea product and higher values of the surface reflectance indicating lighter colour of the black leaf tea or the end tea product. The surface reflectance may be measured by any commercially available measuring instrument. A preferred instrument for the surface reflectance measurement is Photovolt model 577 Reflectometer available from Photovolt Instruments, USA.

D65 is a standard illuminant defined by the International Commission on Illumination (CIE). The D65 illuminant is intended to represent average daylight throughout the visible spectrum. The surface reflectance measurements are carried out under D65 illuminant.

Surface reflectance of the tea product of the invention measured with amber tristimulus filter under D65 illuminant is preferably less than 13%, more preferably less than12.2%, further preferably less than 12% and most preferably less than 11 %. There is no particular lower limit and the surface reflectance of the tea product may be as low as 1 %.

The invention will now be illustrated with help of examples. The examples are for the purpose of illustration only and do not limit the scope of the invention in any manner.

### Examples

### Materials and Methods

Following materials were used in the experiments: Modifiied corn starch, EmCap® (Cargill International, USA), Gum acacia powder (Collides Naturels International, France), sucrose (E.I.D Parry (India) Limited, Chennai, India). Viscozyme® L (Novozymes, Denmark).

### Black leaf tea (dust and leaf form) were obtained from North India tea gardens

Aqueous solution/dispersion of the substance (gum, starch, sugar or enzyme) was prepared by adding requisite amount of the substance to water, filtering through 100 micron mesh filter and heating if required to achieve specified temperature.

Black leaf tea was transferred to a Hobart mixer and the aqueous solution/dispersion was sprayed on to the black leaf tea, and the resultant mixture was mixed for about 10 minutes. The wet mixed mass was dried in a tray dryer at 80 °C for 20-40 minutes till the moisture content of the final tea product was less than 6% by weight.

### Surface reflectance measurements

Photovolt Model 577 Reflectometer from Photovolt Instruments, USA, was used for the measurements of surface reflectance.

Search units (Y/T) were used with amber filter set. Standard plaque (26-577-01 719) was used for calibration.

Procedure:
1. Install the Amber filter into the search unit for the reflectance measurement
2. Select the appropriate filter channel ('A' out of A, B, or G) by pressing the corresponding filter on the 577 front panel.
3. Place the black cavity standard on the search unit.
4. Depress the CHANGE key - the display goes black.
5. Depress the ZERO key - the display reads .0 (=/- 0.1).
6. Place a standard plaque on the search unit {Amber coloured plaque used is 26-577-01 719 (Green 8.5).
7. Depress the STD key - the display reads "75.0" or the last standard value entered for this filter channel. The STD, CHANGE, A, B and G LED's will all be lit.
8. Enter the standard plaque value by using the A, B, and G keys to increment the display's digits to the value printed on the back of the plaque for the selected filter (71.8)
9. Depress the STD key again - all LED's expect the selected filter channel LED (A, B, or G) will go out.This display should now be in the normal display mode and should display the value entered for the standard plaque (+/-0.2).
10. Fill the cuvet about 2/3^{rd} with sample (the black leaf tea or tea product) and tap gently to settle the powder/tea sample. Use the PRESS (Plastic part) to firmly press the sample into place or manually compress the powder. Observe the bottom of the cuvet and ensure that there are no air spaces, etc. Wipe the external surface of the cuvet clean.
11. Place the filled cuvet on the search unit.
12. Obtain reflectance values.

### Black leaf tea coated with starch

Black leaf tea (lot CB11) obtained from north Indian garden was coated with EmCap at various levels to obtain final tea products having various compositions as tabulated below. Also tabulated are reflectance values. Temperature of the coating solution was 25 °C in all the cases. Moisture content of the final dried tea product was less than 6% by weight in all the cases.

**Table 1: Black leaf tea coated with starch**

| Example No | EmCap concentration in the coating solution (% by weight) | % by weight EmCap in the tea product | Surface reflectance (%) | Remark |
|---|---|---|---|---|
| Uncoated CB11 | - | - | 15.3 | Light gray |
| 1 | 8.6 | 1 | 11.5 | Dark |
| 2 | 15.8 | 2 | 11.0 | Dark |
| 3 | 22.0 | 3 | 10.4 | Dark |
| 4 | 27.2 | 4 | 9.4 | Dark |
| 5 | 31.8 | 5 | 9.4 | Dark |
| 6 | 3.8 | 1 | 10.7 | Dark |
| 7 | 7.3 | 2 | 10.7 | Dark |
| 8 | 10.6 | 3 | 10.4 | Dark |
| 9 | 13.6 | 4 | 10.2 | Dark |
| 10 | 16.4 | 5 | 9.9 | Dark |

From the results it is clear that the coating with starch solution results into relatively dark end product.

### Black dust tea coated with gum acacia

Starting tea was black dust tea (lot CB12) obtained from tea gardens in north India. Coating solution was at 25 °C in all the cases.

**Table 2: Black dust tea coated with gum acacia**

| Example No | Gum concentration in the coating solution (% by weight) | % by weight Gum in the tea product | Surface reflectance (%) | Remark |
|---|---|---|---|---|
| Uncoated CB12 | - | - | 12.3 | Light gray |
| 11 | 3.8 | 1 | 12.1 | Dark |
| 12 | 7.3 | 3 | 10.2 | Dark |
| 13 | 16.4 | 5 | 10.2 | Dark |

From the results it is clear that the coating with gum acacia solution results into relatively dark end product.

### Black leaf tea coated with glucose syrup

Starting tea was black dust tea (lot CB12) obtained from tea gardens in north India. Coating solution was at 25 °C in all the cases.

**Table 3: Black leaf tea coated with glucose syrup**

| Example No | Glucose concentration in the coating solution (% by weight) | % by weight Glucose in the tea product | % by weight lumps in tea product | Surface reflectance (%) | Remark |
|---|---|---|---|---|---|
| Uncoated CB12 | - | - | - | 12.3 | Light gray |
| 14 | 12.7 | 15 | 0 | 7.2 | Dark |
| 15 | 46.4 | 30 | 28 | 7.0 | Dark |

### Black leaf tea coated with sucrose

Starting tea was black leaf tea (lot CB10) obtained from tea gardens in north India. Large size lumps were segregated by sieving and weighed to measure % by weight lumps in the tea product.

**Table 4: Black leaf tea coated with sucrose**

| Example No | Sucrose concentration in the coating solution (% by weight) | Temperature of coating solution (°C) | % by weight Sucrose in the tea product | % by weight Lumps in tea product | Surface reflectance (%) | Remark |
|---|---|---|---|---|---|---|
| Uncoated CB10 | - | - | - | - | 21.7 | Light |
| 16 | 30.3 | 25 | 15 | 0 | 12.1 | Dark |
| 17 | 46.4 | 25 | 30 | 6.8 | 3.2 | Dark |
| 18 | 46.4 | 55 | 30 | 5.0 | 3.5 | Dark |
| 19 | 46.4 | 75 | 30 | 1.0 | 5.1 | Dark |

It is clear that increasing the concentration of the coating solution increases the darkness of the tea product as compared to that of uncoated black tea. Furthermore, with increase in concentration of the coating solution, the energy required for drying would be relatively lower. However, with increasing concentration of the coating solution, there is a tendency of formation of lumps. The problem related to the lump formation whilst using relatively high concentration of the coating solution is significantly reduced by increasing the temperature of the coating solution.

### Black leaf tea coated with enzyme

Base black dust tea (CB09) and black leaf tea (Cb06) were coated with Viscozyme® as tabulated below.

**Table 5:**

| Example No | Viscozyme® concentration in the coating coating solution (% by weight) | Temperature of coating solution (°C) | % by weight Enzyme in the tea product | Surface reflectance (%) | Remark |
|---|---|---|---|---|---|
| CB09 dust | - | - | - | 18.8 | Light |
| 20 (Coated CB09) | 2.0 | 25 | 0.29 | 6.4 | Dark |
| CB06 black leaf tea | - | - | - | 14.5 | Light |
| Coated CB06 | 0.8 | 50 | 0.12 | 11.3 | Dark |

From the results, it is clear that enzyme coating darkens the colour of the base tea.

### Black leaf tea coated with enzyme

Starting tea was black leaf tea (lot CB10) obtained from tea gardens in north India. Large size lumps were segregated by sieving and weighed to measure % by weight lumps in the tea product.

**Table 6:**

| Example No | Chicory concentration in the coating solution (% by weight) | Temperature of coating solution (°C) | % by weight chicory in the tea product | Surface reflectance (%) | % Lumps | Remark (light or dark) |
|---|---|---|---|---|---|---|
| Uncoated-CB10 | - | - | - | 21.4 | - | Light |
| 21 | 12.7 | 25 | 5.0 | 11.3 | 0 | Dark |
| 22 | 30.3 | 25 | 15.0 | 7.6 | 0 | Dark |
| 23 | 46.4 | 25 | 30.0 | 3.7 | 35.7 | Dark |
| 24 | 46.4 | 50 | 30.0 | 2.7 | 12.5 | Dark |
| 25 | 46.4 | 75 | 30.0 | 2.4 | 4.3 | Dark |

From the above table it is clear that coating the tea leaf with chicory extract darken the colour of the leaf. With the increased concentration of the chicory the darkening effect is much pronounced. With lower concentration chicory (example 21, 22) there is no lump formation. For higher concentration of chicory (example 23, 24, 25) although there are formation of lumps but with the increase in temperature lump formation reduces.

Therefore by way of present invention it is now possible to provide a tea product with darker colour by treating the off coloured tea product.

## Claims

1. A process for preparing a tea product comprising the steps of:
a. Adding an aqueous solution or dispersion of a substance selected from the group consisting of sugars, vegetable gums, chicory extract and enzymes or a mixture thereof to black leaf tea to obtain a mixture, and;
b. Drying the mixture to a moisture content of less than 10% by weight to obtain a tea product,
**characterized in that** the surface reflectance of the starting black leaf tea measured with amber tristimulus filter under D65 illuminant is greater than 12%, and wherein the tea product comprises 10-40% of sugars by weight when the selected substance is sugars.

2. A process as claimed in claim 1 **characterized in that** surface reflectance of the tea product measured with amber tristimulus filter under D65 illuminant is less than 12.2%.

3. A process as claimed in any one of the preceding claims wherein when said substance is chicory extract, the tea composition comprises 1-60 % by weight of chicory.

4. A process as claimed in any one of the preceding claims wherein when said substance is vegetable gum, the tea composition comprises 0.5-10% by weight vegetable gum.

5. A process as claimed in any one of the preceding claims wherein when said substance is enzyme, the tea composition comprises 0.05-10% by weight enzyme.

6. A process as claimed in any one of the preceding claims wherein temperature of said aqueous solution or dispersion is in the range 1-95 °C.

7. A process as claimed in claim 1 or claim 2 wherein said substance is selected from the group consisting of sugars, chicory extract and vegetable gums.

8. A process as claimed in claim 1 or claim 2 wherein said substance is selected from the group consisting of vegetable gums and chicory extract.

## Patentansprüche

1. Verfahren zum Herstellen eines Teeproduktes,
das die folgenden Schritte aufweist:
a. Zugeben einer wässrigen Lösung oder Dispersion einer Substanz, die aus der Gruppe ausgewählt ist, die aus Zuckern, Pflanzengummis, Zichorienextrakt und Enzymen oder einem Gemisch davon besteht, zu Schwarzem Blatttee, um ein Gemisch zu erhalten; und
b. Trocknen des Gemischs bis zu einem Feuchtigkeitsgehalt von weniger als 10 Gew.-%, um ein Teeprodukt zu erhalten;
**dadurch gekennzeichnet, dass** der Reflexionsgrad der Oberfläche des zugrunde liegenden Schwarzen Blatttees mehr als 12 % beträgt, und zwar mit einem Bernstein-Dreibereichsfilter unter einem D65-Leuchtmittel gemessen, und wobei das Teeprodukt 10 bis 40 Gew.-% Zucker aufweist, wenn die ausgewählte Substanz Zucker ist.

2. Verfahren nach Anspruch 1,
**dadurch gekennzeichnet, dass** der Reflexionsgrad der Oberfläche des Teeproduktes weniger als 12,2 % beträgt, und zwar mit dem Bernstein-Dreibereichsfilter unter einem D65-Leuchtmittel gemessen.

3. Verfahren nach einem der vorstehenden Ansprüche,
wobei die Teezusammensetzung 1 bis 60 Gew.-% Zichorien aufweist, wenn die Substanz Zichorienextrakt ist.

4. Verfahren nach einem der vorstehenden Ansprüche,
wobei die Teezusammensetzung 0,5 bis 10 Gew.-% Pflanzengummi aufweist, wenn die Substanz Pflanzengummi ist.

5. Verfahren nach einem der vorstehenden Ansprüche,
wobei die Teezusammensetzung 0,05 bis 10 Gew.-% Enzym aufweist, wenn die Substanz ein Enzym ist.

6. Verfahren nach einem der vorstehenden Ansprüche,
wobei die Temperatur der wässrigen Lösung oder Dispersion im Bereich von 1 bis 95 °C liegt.

7. Verfahren nach Anspruch 1 oder 2,
wobei die Substanz aus der Gruppe ausgewählt ist, die aus Zuckern, Zichorienextrakt und Pflanzengummis besteht.

8. Verfahren nach Anspruch 1 oder 2,
wobei die Substanz aus der Gruppe ausgewählt ist, die aus Pflanzengummis und Zichorienextrakt besteht.

## Revendications

1. Procédé de préparation d'un produit de thé comprenant les étapes :
a. d'addition d'une solution ou d'une dispersion aqueuse d'une substance choisie dans le groupe constitué de sucres, de gommes végétales, d'extraits de chicorée et d'enzymes ou d'un mélange de ceux-ci à du thé noir en feuilles pour obtenir un mélange, et ;
b. de séchage du mélange à une teneur en humidité inférieure à 10 % en masse pour obtenir un produit de thé,
**caractérisé en ce que** le coefficient de réflexion de surface du thé noir en feuilles de départ mesuré avec un filtre trichromatique ambré sous une lumière D65 est supérieur à 12 %, et dans lequel le produit de thé comprend 10-40 % en masse de sucres lorsque la substance choisie est des sucres.

2. Procédé selon la revendication 1, **caractérisé en ce que** le coefficient de réflexion de surface du produit de thé mesuré avec un filtre trichromatique ambré sous une lumière D65 est inférieur à 12,2 %.

3. Procédé selon l'une quelconque des revendications précédentes, dans lequel, lorsque ladite substance est un extrait de chicorée, la composition de thé comprend 1-60 % en masse de chicorée.

4. Procédé selon l'une quelconque des revendications précédentes, dans lequel, lorsque ladite substance est une gomme végétale, la composition de thé comprend 0,5-10 % en masse de gomme végétale.

5. Procédé selon l'une quelconque des revendications précédentes, dans lequel, lorsque ladite substance est un enzyme, la composition de thé comprend 0,05-10 % en masse d'enzyme.

6. Procédé selon l'une quelconque des revendications précédentes, dans lequel la température de ladite solution ou dispersion aqueuse se trouve dans l'intervalle de 1-95°C.

7. Procédé selon la revendication 1 ou la revendication 2, dans lequel ladite substance est choisie dans le groupe constitué de sucres, d'extrait de chicorée et de gommes végétales.

8. Procédé selon la revendication 1 ou la revendication 2, dans lequel ladite substance est choisie dans le groupe constitué de gommes végétales et d'extraits de chicorée.
